# EUROPEAN PATENT APPLICATION

(11) **EP 4 201 608 A1**
(43) Date of publication of application: **28.06.2023**
(21) Application number: 22212563.5
(22) Date of filing: 09.12.2022
(51) Int. Cl.: B25J 9/16, G05D 1/02, B25J 11/00, B25J 19/06, G06V 20/10, G06V 40/20

(54) **UNINTENDED HUMAN ACTION DETECTION IN AN AUTONOMOUS MOBILE ROBOT ENVIRONMENT**

(30) Priority: 22.12.2021 US 202117559646
(71) Applicant: INTEL Corporation, Santa Clara, CA 95054 (US)
(72) Inventor: DHAMASIA, Akash, 81673 München (DE); GEISSLER, Florian, 81371 München (DE); GRAEFE, Ralf, 85540 Haar (DE); KOSE CIHANGIR, Neslihan, 81927 München (DE); PAULITSCH, Michael, 85521 Ottobrunn (DE); ROSALES, Rafael, 82008 Unterhaching (DE); STOEFFLER, Norbert, 82166 Gräfelfing (DE)
(74) Representative: 2SPL Patentanwälte PartG mbB

(57) **Abstract**

A computing device, including: a memory configured to store computer-readable instructions; and unintended human motion detection processing circuitry configured to execute the computer-readable instructions to cause the computing device to: interpret a human action; receive autonomous mobile robot (AMR) sensor data from an AMR sensor; and detect whether the human action is intended or unintended, wherein the detection is based on a predicted human action, a current human emotional or physical state, the interpreted human action, and the AMR sensor data.

## Description

### Technical Field

The present disclosure generally relates to human action in a autonomous mobile robot (AMR) environments, and more specifically, to unintended human action detection in an AMR environment.

### Background

In an environment where humans and AMRs co-exist and interact, an AMR may misinterpret an unintended human action to result in a catastrophic consequence. The human physical or emotional state may contribute to an involuntary human action that triggers an AMR to perform an action that was unintended. For example, a person manually controlling an AMR arm may sneeze to cause the AMR arm to move to an unsafe location.

Further, AMRs are trending toward closer human-AMR collaboration and greater autonomy for AMRs. This leads to a potentially higher risk of collisions between AMRs and humans, and in the case of Autonomous Mobile Robots (AMRs), between AMRs. AMRs also perform complicated tasks involving loads with a risk of hitting infrastructure or other items in the surroundings. This leads to direct damage of the AMR or infrastructure or indirect damage to a human from falling parts.

One way to reduce accidents with AMRs is to analyze accidents, close calls, and high-risk scenarios. Close calls can be analyzed based on environmental models (speed, friction, ability to react based on AMR load and expected human behavior) and variations within likely uncertainties. A load of a newly-forming interactive AMR may have a highly-dynamic load from a weight, position, and size/volume perspective, and will move much more freely through their unstructured environment.

### Brief Description of the Drawings

FIG. 1 illustrates a process flow for unintended human action detection in accordance with the disclosure.
FIG. 2 illustrates a process flow for a plausibility check of intended human action detection in accordance with the disclosure.
FIG. 3 is a table representation of unintended human action detection in accordance with the disclosure.
FIG. 4 is a table representation of a comparison of conventional detection with unintended human action detection in accordance with the disclosure.
FIG. 5A illustrates two- non-overlapping safety hulls.
FIG. 5B illustrates an AMR safety area.
FIG. 6 illustrates heat maps results of the continuous accident risk analysis
FIG. 7A illustrates an environment with unloaded AMRs and their safety area.
FIG. 7B illustrates an environment with a loaded AMR and an unloaded AMR and their safety areas.
FIG. 8 illustrates a process flow for scenario and high-risk area identification.
FIG. 9 illustrates an AMR safety system in accordance with the disclosure.
FIG. 10 illustrates a block diagram of an exemplary computing device agent in accordance with the disclosure.

### Description of the Aspects

The present disclosure is directed to an unintended human action detector for avoiding misinterpretation of a human action that would impose a safety risk in a human-AMR collaborative environment.

By way of overview, section I describes unintended human action detection, and section II describes a plausibility check for an action detected as intended. After human intent prediction, a data-driven unintended human actions detector differentiates from existing anomalous behavior mechanisms in that it incorporates the AMR interpretation of a current human action and information extracted from AMR sensors. The plausibility check, described in section II, is a rules-based check for an action initially detected as intended by the data-driven approach so as to not miss an unintended action. The detector output is a label (intended or unintended) and a corresponding confidence score for a future action.

### I. Unintended human action detection, with confidence estimation

As this first step, the detection flow applies a data-driven approach using a current human state, a predicted human action, information from AMR sensors, and interpreted human action as input to detect a human action as intended or unintended. Further, the unintended human action detection considers these same inputs to provide a confidence estimation of an intended/unintended labeling.

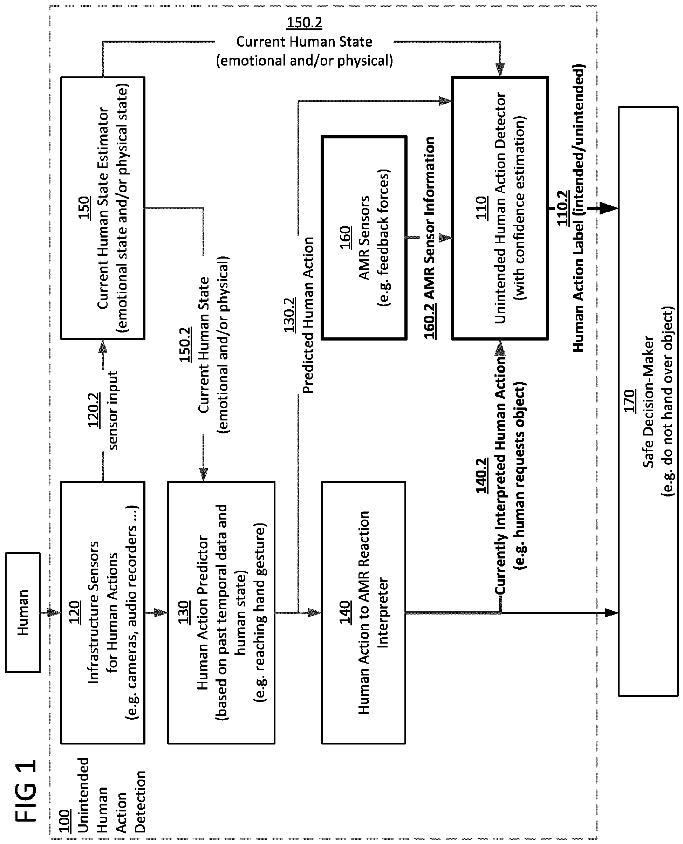

FIG. 1 illustrates a process flow for unintended human action detection 100 in accordance with the disclosure.

The human action detection 100 comprises an unintended human action detector 110, sensors for human actions 120 (e.g., infrastructure sensors and the like), a human action predictor 130, a human action interpreter 140, a current human state estimator 150, AMR sensors 160, and a safe decision-maker 170.

### A. Input of the unintended human action detector 110

The unintended human action detector 110 may be a deep neural network that handles as an input predicted human actions 130.2, currently interpreted human actions 140.2 to infer AMR actions, AMR sensor information 160.2, and current human state estimation (emotional and/or physical) 150.2.

### 1. Current human state information 150

Initially, sensor input 120.2 from sensors 120 (e.g., camera images of human faces, human pose, etc.) is applied to a current human state estimator 150 to estimate a current human state. The output of the current human state estimator 150 can be an emotional state (e.g., sad or angry) and/or a physical state (e.g., distracted or sneezing), which is represented as categorical data. There are existing solutions for human state estimation, and in the interest of being concise and not obscuring details of the disclosed subject matter, detailed descriptions are omitted here.

### 2. Predicted human actions 130.2

The human action predictor 130 predicts human actions 130.2 using past temporal data and the current human state 150.2 to anticipate future actions. The analysis of the historical data enables estimation of future human actions. This can be achieved in multiple ways, such as applying video data representing past temporal information directly as input to convolutional neural network (CNN)-based models.

### 3. Currently interpreted human action 140.2 to infer AMR action

A human action to AMR reaction interpreter 140 is used to determine the meaning of a human action in the AMR operation context, and infer the AMR reaction towards perceived human action 130.2. An example of a human action is a hand gesture to request the AMR to perform an operation. An example of an inferred AMR reaction is the AMR arm must move. This information can be analyzed to better identify unintended actions that may have a safety impact, based on the AMR interpretation of the situation.

### 4. Information from AMR sensors 160.2

Some AMRs or AMR arms have built-in sensors 160 that can indicate whether the action is intended or unintended. For example, if an AMR arm may have a force feedback sensor 160 that can be used to augment the interpretation or support a confidence score of an unintended action prediction. Another example is an odometer that does not show the expected speed the AMR commands to its actuator wheels, wherein the speed reading could support inference actions.

### B. Output of the unintended human action detector 119

The output 110.2 of the unintended human action detector 110 is a classification result for the currently observed human action 160.2 that can be either of "intended" or "unintended". The output may additionally include a confidence score of the binary classification.

The safe decision-maker 170 combines the currently interpreted human action 140.2 with the human action label of intended/unintended for further decision-making and safety reasoning (e.g., AMR does not hand over an object). The safe decision-maker 170 may performed locally by the AMR or centrally at the edge or cloud. In one aspect, a safety corridor (e.g., to calculate regions of currently safe passage for AMRs) that defines situation-dependent rules for collaborative AMRs is formed.

Any of the components, such as the human action predictor 130, human action interpreter 140, current human state estimator 150, safe decision-maker 170, and plausibility check 220 (described below) may be implemented using machine learning.

### II. Plausibility check 220

By way of overview, as a second step for a human action that is detected in the initial step as intended (described above in section I), an additional rule-based plausibility check is performed using the same inputs as for the initial detection.

To improve the quality of the detection, the plausibility check 220 performed of the initial inputs to reveal safety-critical false negatives directly using a rule-based approach. A purpose of the plausibility check 220 is to not dismiss any unintended action incorrectly labeled as intended, and in such a case, this plausibility check overrides the initial result. This check is applied for the cases where the data-driven approach might have not identified a safety-critical "unintended" action. In such a case, the "intended" labeling can be overridden by a rule-based approach that ensures safety critical requirements. For example, the AMR interprets the situation as appropriate to grasp an item at high speed, while the human is predicted to leave its hand at the table and this action is labeled as intended. Due to detected conflict, the plausibility check overrides a high confidence value to the "unintended" classification. The safe decision-making can then make use of the labelled (intended or unintended) predicted intents information according to its own policy.

For the rule-based approach, the system designer must identify a set of rules to validate the output of the data-driven subsystem to comply with the safety goals established in an established safety process (e.g., as in ISO26262). This process requires analyzing potential hazards, their likelihood, and severity. Hazards related to a misclassification of an unintended action must be validated by the rule-based system. The implementation of such system may take place in form of a matrix (table), a decision tree, an imperative language (e.g., python code), or mathematical formula.

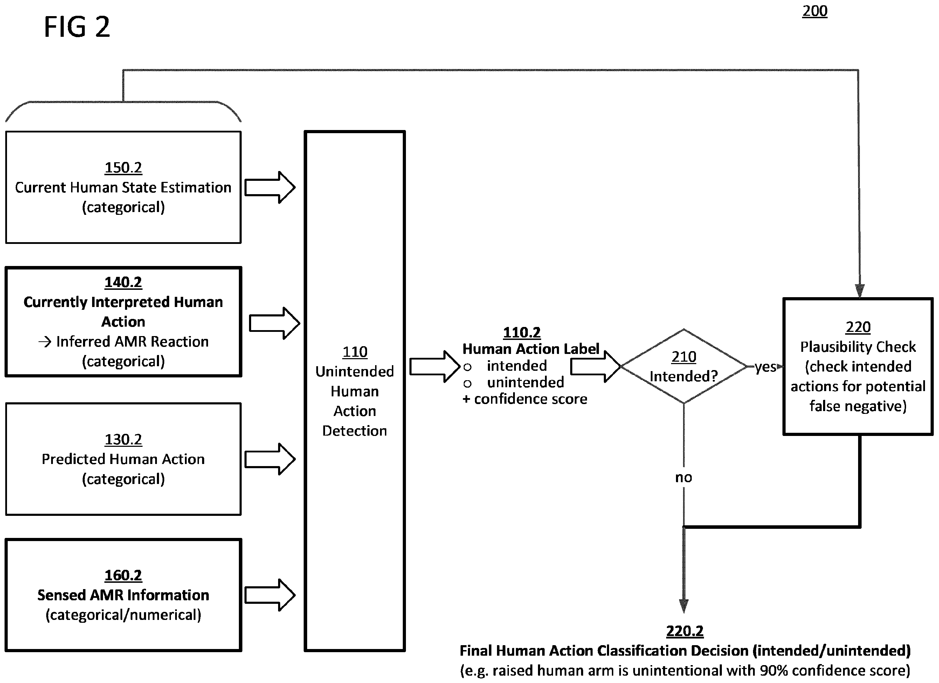

FIG. 2 illustrates a process flow for a plausibility check of intended human action detection 200 in accordance with the disclosure.

At process step 210, if the human action label 110.2 is intended, the process proceeds to the plausibility check 220. Otherwise, the process skips the plausibility check 220 and outputs the human action label 110.2 of unintended as the final human action decision 220.2.

For example, if the predicted human action 130.2 is opposite the currently interpreted human action 140.2, this non-plausible combination will directly flag "unintended" and override the initial human action label of intended and output the final human action classification decision 220.2 as unintended. An example is when a human is predicted to approach a dangerous machine blade, while the AMR infers that the human should veer away from the blade.

This rule-based approach could be implemented as a decision tree or as a tensor table, where a discrete class of AMR actions, information from AMR sensors, human actions and environment state define dimensions to assign a pre-defined classification of intended or unintended actions obtained through a rigorous safety process.

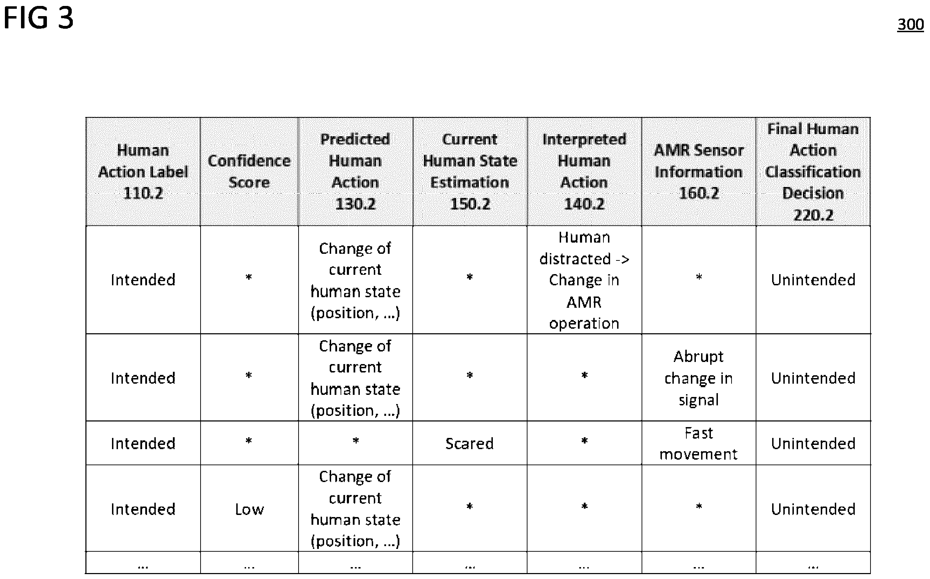

FIG. 3 is a table representation 300 of unintended human action detection in accordance with the disclosure. This table representation 300 is of a rule-based system. The table 300 shows examples of plausibility check rules for safety monitoring of false negatives, that is, unintended actions incorrectly classified as intended by data-driven approach. The asterisk (*) means any value.

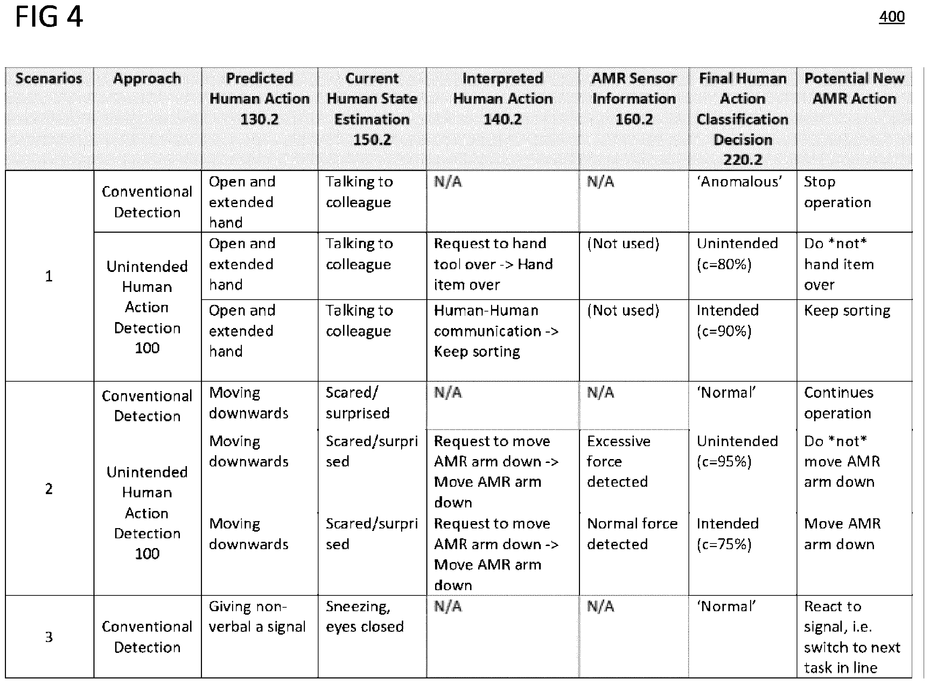

FIG. 4 is a table representation 400 of a comparison of conventional detection with the unintended human action detection 100 in accordance with the disclosure. The conventional detection results in the AMR operation stopping more than necessary or not appropriately. The unintended human action detection 100 leverages the AMR's interpreted human action 140.2 and the AMR sensor information 160.2 to better evaluate a particular scenario.

### III. Safety and Risk Analysis

Edge or cloud infrastructure identifies potential accidents and provides a recommendation for future prevention. Observation and safety-related analysis, such as potential collision events with state information (e.g., net size, net weight, load weight and size, dimensions of AMR arms and similar tools) are received from an AMR management system. This information is used to dynamically adjust a three-dimensional safety hull around AMRs. In one aspect, near accident scenarios are analyzed based on overlapping or close safety hulls considering reasonable variations. Such analysis may include unforeseen or unlikely scenarios such as water spills, different ground friction etc. In another aspect, such scenarios may include semantic hazard interpretations such as hitting a person and not an object, and hitting a person in the neck or head.

### A. Risk Areas, Safety Hulls, and Safety Areas

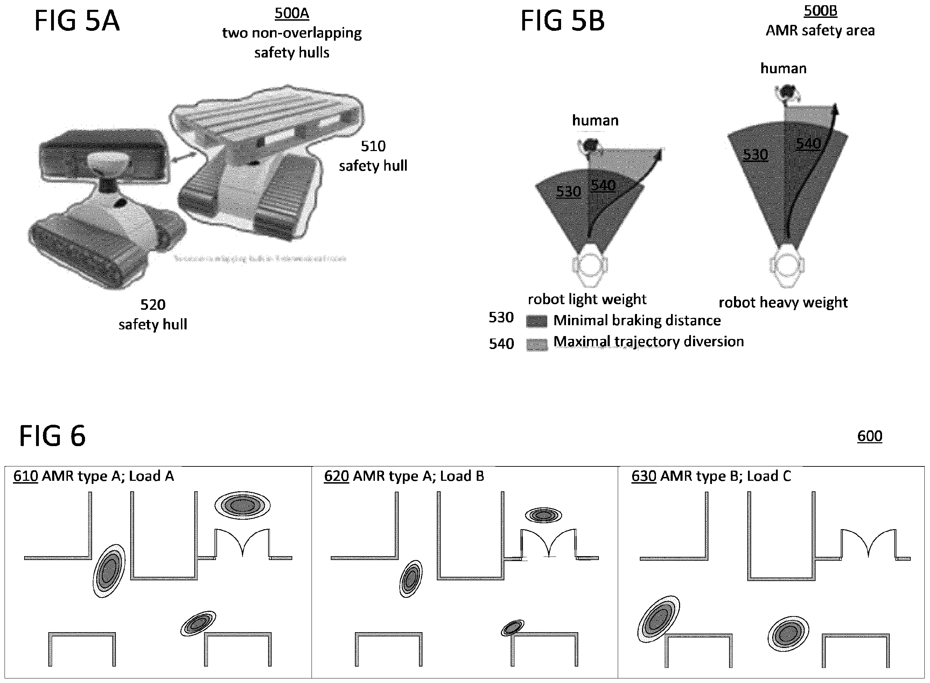

FIG. 5A illustrates non-overlapping safety hulls 510, 520. A safety hull 510, 520 is a three-dimensional space of an AMR and load that is needed for current state and a near future movement. FIG. 5B illustrates an AMR safety area 500B depending on load represented by minimal breaking distance 530 and possible trajectory diversion 540.

FIG. 6 illustrates heat maps 610, 620, 630 of safety risk hotspots. The lines represent walls in a factory floor plan. The ovals represent high-risk areas based on the movement of AMRs on the factory floor. Safety risk hotspots differ depending on different loads and AMR types. The heat maps 610, 620, 630 visualize that different loads for a same type of AMR result in more or less risk, or different types of AMRs cause risk areas at different locations.

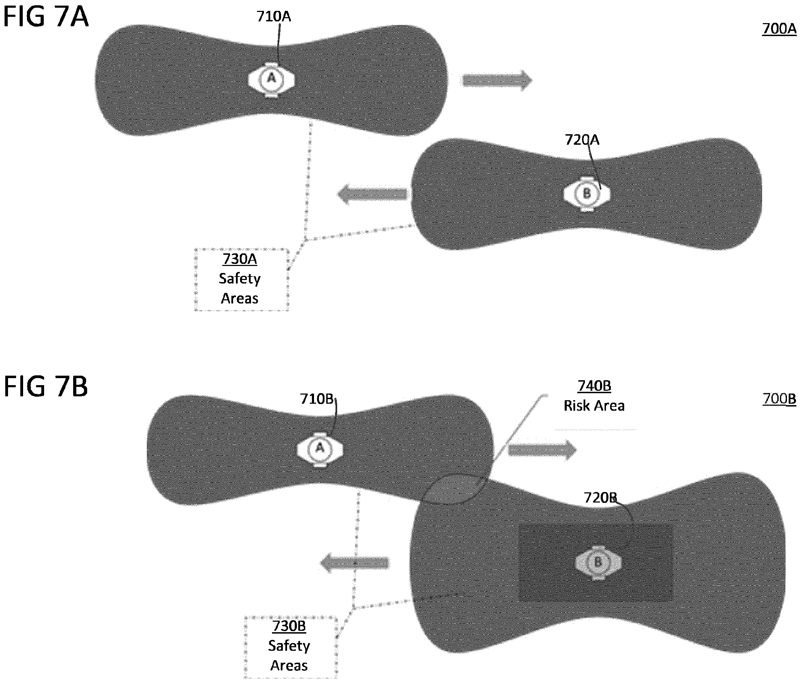

FIG. 7A illustrates an environment 700A with unloaded AMRs 710A and 710B and their safety areas 730A. FIG. 7B illustrates an environment 700B with an unloaded AMR 710B and a loaded AMR 720B, their safety areas 730B, and a safety risk area 740B.

The safety areas 730A, 730B represents the area were the AMR could safely come to a halt or turn. The unloaded situation becomes more risky when the AMR 720B is loaded. Its safety area increases, both safety areas overlap, and a risk is detected. This is because AMR 720B's safety area 730B is enlarged due to longer breaking distances and wider turning radiuses. If the safety areas of AMRs passing each other intersect, this is a risk area 740B for a potential collision. But a collision is not certain. The AMRs 710B, 720B might pass safely if operation goes according to plan. But if for some reason the AMRs when in this safety risk area 740B change direction and move toward each other, they may not be able to brake in time to prevent a collision. Collisions are not being prevented in real-time, but rather safety risk information is identified for safer planning.

### B. Scenario and high-risk area identification 800

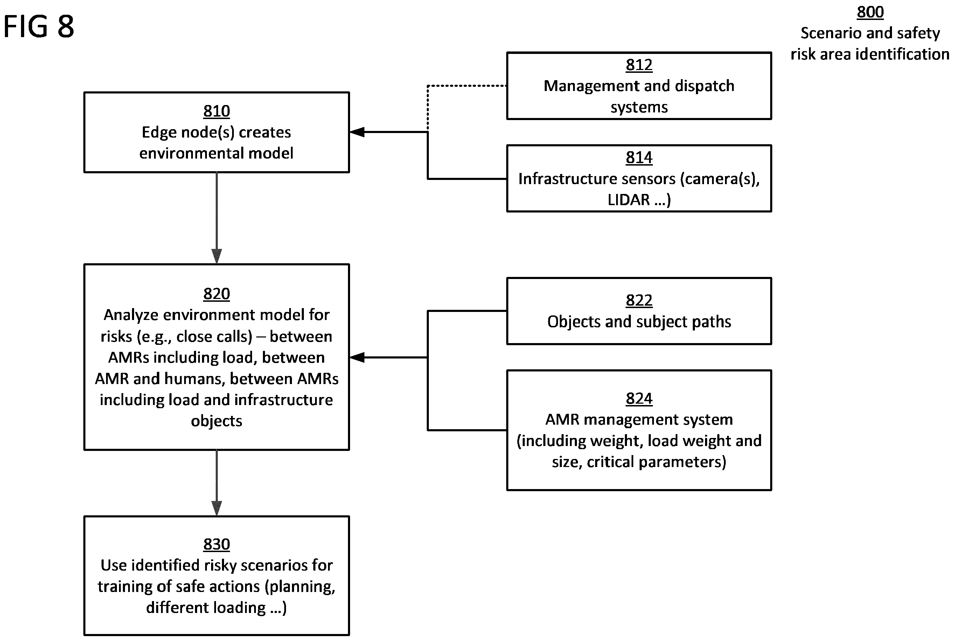

FIG. 8 illustrates a process flow for scenario and high-risk area identification 800. Movement of AMRs and associated loads and appendages are monitored and analyzed.

At process step 810, an edge node(s) creates an environmental model based on management and dispatch system information 812 and infrastructure sensor information 814 (e.g., camera(s), LIDAR ...). The edge node is equipped with sensors suitable to reliably capture an entire movement area of the observed AMRs without occlusion.

At process step 820, the environmental model is deployed to dynamically identify safety areas and safety hull, and detect and record cases where AMRs enter each other's safety areas, or humans or other vehicles enter the safety areas, or actual collisions occur. This identification is used to detect high risk areas on the factory floor. In one aspect, the edge node buffers sensor data and derived events, and in case of a detected risk or collision, stores them permanently.

The edge nodes use objects and subject paths 822 to run machine learning algorithms to detect, track and predict trajectories for moving AMRs in its sensor coverage area. The edge node can distinguish AMRs from other vehicles and humans.

The edge node is linked to an AMR management system 824, which is configured to assign and verify tasks of the AMRs. The AMR management system 824 has information about position, action plan, load, and physical parameters such as weight and size of the AMR. This information is used by the edge node to improve its estimate about future movement of the main AMR platform and its appendices like AMR arms (and load) with a goal to reduce accidents. This leads to a more realistic estimate of a safety area of an AMR (and also safety hull considering AMR load). A safety area means that if another object stays out of this area the AMR can safely avoid collision by breaking or changing direction. A safety hull is a three-dimensional space, which is needed by an AMR and its load. Encroachment of a safety hull may lead to damage to infrastructure other AMR or its load or humans. However, entering a safety area does not mean a collision is inevitable. The same is true for safety hull. Only that its risk increases.

At process step 830, the environmental model is deployed to identify safety risks between AMRs including loads, between an AMR and a human, between an AMR including a load and infrastructure objects, etc. Knowledge obtained will influence future AMR path planning (e.g., more space), different loading or loading management (e.g., heavy load closer to ground; minimal load overreaching, arms as close as possible to AMR center ...), speed reduction/adaptation in critical and risky areas, and the like.

### C. AMR safety system 900

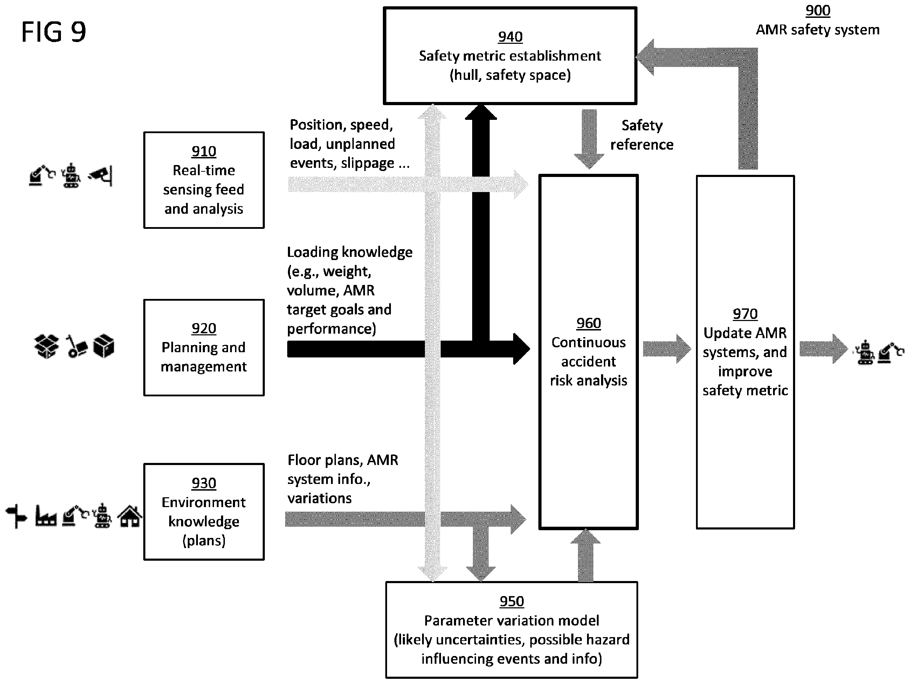

FIG. 9 illustrates an AMR safety system 900 in accordance with the disclosure.

The AMR safety system 900 comprises a real-time sensing feed and analysis module 910, a planning and management module 920, environmental knowledge module 930, a safety metric establishment module 940, a parameter variation model 950, a continuous accident risk analysis module 960, and an update module 970. The safety metric establishment module 940 and the continuous accident risk analysis module 960 are more significant modules here.

The AMR safety system 900 is not real-time system, but repeatedly provides updates so the AMR system for possible plan modification to increase safety. For example, the AMR system could change routes without changing speed. Or the AMR system could provide factory management a basis to change the layout of the floor plan to reduce the risk. Ultimately the goal is for the safety risk areas to be eliminated or at least minimized.

### 1. Real-time sensing feed and analysis module 910

The real-time sensing feed and analysis module 910 has different type of sensors, depending on local suitability. Examples of suitable sensors include cameras, stereo cameras, LIDAR, radar, and the like. Using machine learning algorithms, this module 910 detects, classifies, and tracks static and dynamic objects. The module 910 also detects floor conditions, such as liquid spillage or dirt on the floor. The information from this module 910 will be used to determine when modified safety areas intersect, as in the risk area 740B of FIG. 7B.

### 2. Planning and management module 920

The planning and management module 920 is configured to provide additional information about the AMRs that are controlled. Examples of this additional information include, for example, size, net weight, maximum breaking force, minimum turn radius, but importantly, weight of changing load, and if known, dimensions and center of mass for the load. The information may also include potential AMR arms used for carrying load and arm positions.

### 3. Environmental knowledge module 930

The environment knowledge module 930 is configured to store static information, floorplans, and points of interest such as loading and unloading spots for the AMRs.

### 4. Safety metric establishment module 940

The safety and metric establishment module 940 is configured to receive information from the real-time sensing feed and analysis module 910 and the planning and management module 920. Using this information, the safety and metric establishment module 940 is configured to dynamically update the safety space and safety hull of the AMRs.

### 5. Parameter variation model 950

The parameter variation module 950 is configured to provide knowledge about semantically rich variations in order to limit the variations to reasonable number. The parameters are varied to stress test the AMR model to identify potential safety risks.

### 6. Continuous accident risk analysis module 960

The continuous accident risk analysis module 960 is configured to receive input from the real-time sensing feed and analysis module 910, the planning and management module 920, the environmental knowledge module 930, the safety metric establishment module 940, and the parameter variation model 950.

Based on this information, the continuous accident risk analysis module 960 is configured to create statistics about high-risk accident areas as shown in FIG. 6. Distances between AMRs, and between AMRs and other objects, are evaluated differently depending on the AMR safety hull and/or safety area, which vary with load, center of mass and position of AMR's manipulator. The statistics include information, such as type of load in conjunction with type of AMR. This information is used to evaluate risks based on transported load and to support risk mitigation fine-grained based on transported load.

Typical statistical evaluations include heat maps and identification of near accident areas and close calls. The heat maps show where reachable sets, also known as safety areas or safety hull encroachments, are violated or come close.

The system considers inaccuracies in analysis of safety area or safety hull. This is accomplished through simulation of actual close scenarios based on slight variations. Parameters varied include, for example, brake coefficient, load shape, size and weight, slipping parameters, and the like. Load parameter, load weight, and load shape may each be varied slightly.

Using infrastructure sensors, the system also considers unforeseen circumstances such as wet spaces, oil spills, sand on floor, parts on a shelf that stick into the moving path at certain height, changing light conditions when calculating reachable sets, safety areas, and/or safety hulls. It is possible to identify hazardous or higher risk scenarios, such as hitting somebody in the head, or collisions high up more easily let the AMR tip. Detection networks may identify hazards like an AMR hitting a person in sensitive body parts such as the head.

### 7. Update AMR system and improve safety metrics module 970

The update AMR system and improve safety metrics module 970 is configured to update the statistics about high-risk accident areas 940B from the continuous accident and risk analysis module 960 to the AMR. This module 970 is also configured to provide input to the safety metric establishment. For example, if one scenario is very risky or accident-prone, then the safety metric can be updated.

### 8. Example of AMR Safety System Process

The safety metric establishment module 940 quantifies how a changing load/mass, moving arms, and/or change of center of mass modifies the safety hull 510/520 of the AMR. The module 940 quantifies risky situations. There may be different degrees of risk, such as safety hulls 510/520 of different AMRs touch, safety hulls 510/520 intersect, or a safety hull 510/520 of one AMR intersects with an object, or there is an actual collision. The module 940 performs its analysis based on safety metrics leading to detected object position and size based on sensor information. The safety metric establishment module 940 then matches detected objects (from real-time sensing feed and analysis module 910) with AMR management system data (from planning management module 920) to enrich detected objects with information about load (e.g., mass, center of mass, carried on AMR arm). The safety metric establishment module 940 also factors in error margins.

The safety metric establishment module 940 then uses this information from the safety metric establishment module 940to calculate a new safety hull/safety space

Finally, the update AMR system and improve safety metric module 970 reports statistic-focused analysis of safety metric definitions.

### IV. Computing Device

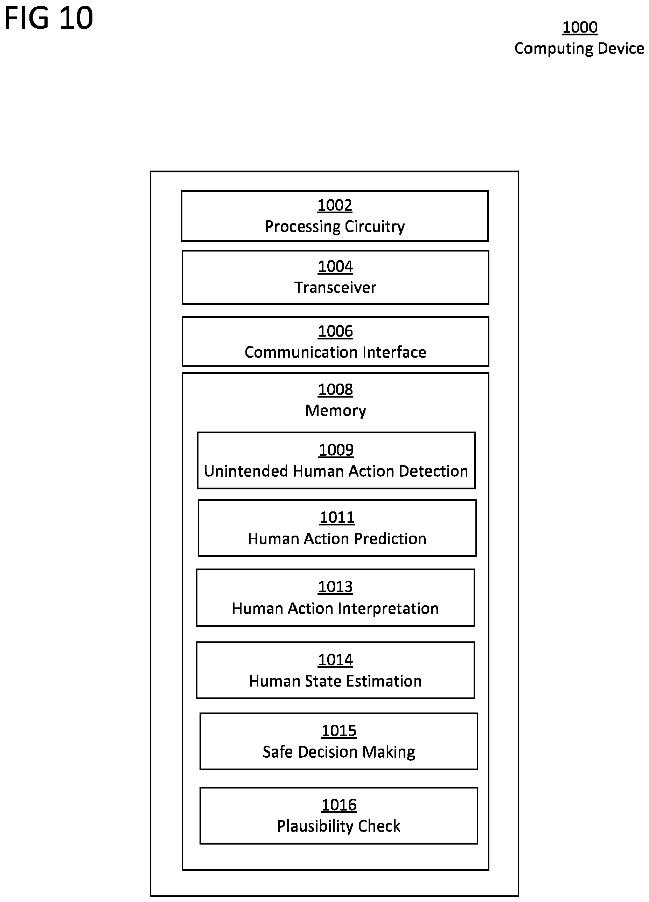

FIG. 10 illustrates a block diagram of an exemplary computing device in accordance with an aspects of the disclosure. In an aspect, the computing device 1000 as shown and described with respect to FIG. 10 may be identified with a central controller and be implemented as any suitable network infrastructure component, which may be implemented as an Edge network server, controller, computing device, etc. As further discussed below, the computing device 1000 may serve the environment in accordance with the various techniques as discussed herein. Thus, the computing device 1000 may perform the various functionality as described herein with respect to unintended human motion detection. To do so, the computing device 1000 may include processing circuitry 1002, a transceiver 1004, communication interface 1006, and a memory 1008. The components shown in FIG. 10 are provided for ease of explanation, and the computing device 1000 may implement additional, less, or alternative components as those shown in FIG 10.

The processing circuitry 1002 may be configured as any suitable number and/or type of computer processors, which may function to control the computing device 1000. The processing circuitry 1002 may be identified with one or more processors (or suitable portions thereof) implemented by the computing device 1000. The processing circuitry 1002 may be identified with one or more processors such as a host processor, a digital signal processor, one or more microprocessors, graphics processors, baseband processors, microcontrollers, an application-specific integrated circuit (ASIC), part (or the entirety of) a field-programmable gate array (FPGA), etc.

In any event, the processing circuitry 1002 may be configured to carry out instructions to perform arithmetical, logical, and/or input/output (I/O) operations, and/or to control the operation of one or more components of computing device 1000 to perform various functions as described herein. The processing circuitry 1002 may include one or more microprocessor cores, memory registers, buffers, clocks, etc., and may generate electronic control signals associated with the components of the computing device 1000 to control and/or modify the operation of these components. The processing circuitry 1002 may communicate with and/or control functions associated with the transceiver 1004, the communication interface 1006, and/or the memory 1008. The processing circuitry 1002 may additionally perform various operations to control the communications, communications scheduling, and/or operation of other network infrastructure components that are communicatively coupled to the computing device 1000.

The transceiver 1004 may be implemented as any suitable number and/or type of components configured to transmit and/or receive data packets and/or wireless signals in accordance with any suitable number and/or type of communication protocols. The transceiver 1004 may include any suitable type of components to facilitate this functionality, including components associated with known transceiver, transmitter, and/or receiver operation, configurations, and implementations. Although depicted in FIG. 10 as a transceiver, the transceiver 1004 may include any suitable number of transmitters, receivers, or combinations of these that may be integrated into a single transceiver or as multiple transceivers or transceiver modules. The transceiver 1004 may include components typically identified with an RF front end and include, for example, antennas, ports, power amplifiers (PAs), RF filters, mixers, local oscillators (LOs), low noise amplifiers (LNAs), up-converters, down-converters, channel tuners, etc.

The communication interface 1006 may be configured as any suitable number and/or type of components configured to facilitate the transceiver 1004 receiving and/or transmitting data and/or signals in accordance with one or more communication protocols, as discussed herein. The communication interface 1006 may be implemented as any suitable number and/or type of components that function to interface with the transceiver 1006, such as analog-to-digital converters (ADCs), digital to analog converters, intermediate frequency (IF) amplifiers and/or filters, modulators, demodulators, baseband processors, etc. The communication interface 1006 may thus work in conjunction with the transceiver 1004 and form part of an overall communication circuitry implemented by the computing device 1000, which may be implemented via the computing device 1000 to transmit commands and/or control signals to the AMRs 111 to execute any of the functions describe herein.

The memory 1008 is configured to store data and/or instructions such that, when the instructions are executed by the processing circuitry 1002, cause the computing device 1000 to perform various functions as described herein. The memory 1008 may be implemented as any well-known volatile and/or non-volatile memory, including, for example, read-only memory (ROM), random access memory (RAM), flash memory, a magnetic storage media, an optical disc, erasable programmable read only memory (EPROM), programmable read only memory (PROM), etc. The memory 1008 may be non-removable, removable, or a combination of both. The memory 1008 may be implemented as a non-transitory computer readable medium storing one or more executable instructions such as, for example, logic, algorithms, code, etc.

As further discussed below, the instructions, logic, code, etc., stored in the memory 1008 are represented by the various modules/engines as shown in FIG. 10. Alternatively, if implemented via hardware, the modules/engines shown in FIG. 10 associated with the memory 1008 may include instructions and/or code to facilitate control and/or monitor the operation of such hardware components. In other words, the modules/engines as shown in FIG. 10 are provided for ease of explanation regarding the functional association between hardware and software components. Thus, the processing circuitry 1002 may execute the instructions stored in these respective modules/engines in conjunction with one or more hardware components to perform the various functions as discussed herein.

The unintended human action detection module 1009, the human action prediction module 1011, the human action interpretation module 1013, the human state estimation module 1014, the safe decision making module 1015, and the plausibility check module 1016 may execute the functionalities as described herein. Further, the real-time sensing feed and analysis module 910, the planning and management module 920, the environmental knowledge module 930, the safety metric establishment module 940, the parameter variation model 950, the continuous accident risk analysis module 960, and the update module 970 may similarly be executed by this computing device 1000.

Various aspects herein may utilize one or more machine learning models to perform or control functions of the vehicle (or other functions described herein). The term "model" as, for example, used herein may be understood as any kind of algorithm, which provides output data from input data (e.g., any kind of algorithm generating or calculating output data from input data). A machine learning model may be executed by a computing system to progressively improve performance of a specific task. In some aspects, parameters of a machine learning model may be adjusted during a training phase based on training data. A trained machine learning model may be used during an inference phase to make predictions or decisions based on input data. In some aspects, the trained machine learning model may be used to generate additional training data. An additional machine learning model may be adjusted during a second training phase based on the generated additional training data. A trained additional machine learning model may be used during an inference phase to make predictions or decisions based on input data.

The machine learning models described herein may take any suitable form or utilize any suitable technique (e.g., for training purposes). For example, any of the machine learning models may utilize supervised learning, semi-supervised learning, unsupervised learning, or reinforcement learning techniques.

In supervised learning, the model may be built using a training set of data including both the inputs and the corresponding desired outputs (illustratively, each input may be associated with a desired or expected output for that input). Each training instance may include one or more inputs and a desired output. Training may include iterating through training instances and using an objective function to teach the model to predict the output for new inputs (illustratively, for inputs not included in the training set). In semi-supervised learning, a portion of the inputs in the training set may be missing the respective desired outputs (e.g., one or more inputs may not be associated with any desired or expected output).

In unsupervised learning, the model may be built from a training set of data including only inputs and no desired outputs. The unsupervised model may be used to find structure in the data (e.g., grouping or clustering of data points), illustratively, by discovering patterns in the data. Techniques that may be implemented in an unsupervised learning model may include, e.g., self-organizing maps, nearest-neighbor mapping, k-means clustering, and singular value decomposition.

Reinforcement learning models may include positive or negative feedback to improve accuracy. A reinforcement learning model may attempt to maximize one or more objectives/rewards. Techniques that may be implemented in a reinforcement learning model may include, e.g., Q-learning, temporal difference (TD), and deep adversarial networks.

Various aspects described herein may utilize one or more classification models. In a classification model, the outputs may be restricted to a limited set of values (e.g., one or more classes). The classification model may output a class for an input set of one or more input values. An input set may include sensor data, such as image data, radar data, LIDAR data and the like. A classification model as described herein may, for example, classify certain driving conditions and/or environmental conditions, such as weather conditions, road conditions, and the like. References herein to classification models may contemplate a model that implements, e.g., any one or more of the following techniques: linear classifiers (e.g., logistic regression or naive Bayes classifier), support vector machines, decision trees, boosted trees, random forest, neural networks, or nearest neighbor.

Various aspects described herein may utilize one or more regression models. A regression model may output a numerical value from a continuous range based on an input set of one or more values (illustratively, starting from or using an input set of one or more values). References herein to regression models may contemplate a model that implements, e.g., any one or more of the following techniques (or other suitable techniques): linear regression, decision trees, random forest, or neural networks.

A machine learning model described herein may be or may include a neural network. The neural network may be any kind of neural network, such as a convolutional neural network, an autoencoder network, a variational autoencoder network, a sparse autoencoder network, a recurrent neural network, a deconvolutional network, a generative adversarial network, a forward thinking neural network, a sum-product neural network, and the like. The neural network may include any number of layers. The training of the neural network (e.g., adapting the layers of the neural network) may use or may be based on any kind of training principle, such as backpropagation (e.g., using the backpropagation algorithm).

The techniques of this disclosure may also be described in the following examples.

Example 1. A computing device, comprising: a memory configured to store computer-readable instructions; and unintended human motion detection processing circuitry configured to execute the computer-readable instructions to cause the computing device to: interpret a human action; receive autonomous mobile robot (AMR) sensor data from an AMR sensor; and detect whether the human action is intended or unintended, wherein the detection is based on a predicted human action, a current human emotional or physical state, the interpreted human action, and the AMR sensor data.

Example 2. The computing device of example 1, wherein the processing circuitry is configured to execute the computer-readable instructions to cause the computing device to: estimate a confidence score of the detected human action being detected as intended or unintended.

Example 3. The computing device of example 1, wherein the processing circuitry is configured to execute the computer-readable instructions to cause the computing device to: check a plausibility of the human action being detected as intended to override a false detection of the human action being intended, wherein the plausibility check is based on the predicted human action, the current human emotional or physical state, the interpreted human action, and the AMR sensor data.

Example 4. The computing device of example 3, wherein the processing circuitry is configured to execute the computer-readable instructions to cause the computing device to: decide an AMR action based on a result of the plausibility check.

Example 5. The computing device of example 1, wherein the processing circuitry is configured to execute the computer-readable instructions to cause the computing device to: decide an AMR action based on a result of the detection of the human action being intended or unintended.

Example 6. The computing device of example 1, wherein the unintended human motion detection processing circuitry is at least partially within the edge or the cloud.

Example 7. The computing device of example 1, wherein the processing circuitry is configured to execute the computer-readable instructions to cause the computing device to: estimate a current emotional or physical state of the human based on infrastructure sensor data.

Example 8. The computing device of example 7, wherein the processing circuitry is configured to execute the computer-readable instructions to cause the computing device to: predict the human action based on the infrastructure sensor data and the current emotional or physical state of a human.

Example 9. The computing device of example 1, wherein the processing circuitry is configured to execute the computer-readable instructions to cause the computing device to: decide an AMR action based on the detected human action being labeled as intended or unintended.

Example 10. A computing device, comprising: a memory configured to store computer-readable instructions; and autonomous mobile robot (AMR) system processing circuitry configured to execute the computer-readable instructions to cause the computing device to: dynamically define a safety area of an AMR based on AMR state information and AMR load information, wherein if there is no other AMR, human, or object in the defined safety area, the AMR will safely avoid collision when breaking or changing direction; continuously analyze, based on the defined safety area, for an accident risk area in which the AMR safety area overlaps with a safety area of the other AMR, with the human, or with the object; and provide the AMR system with the accident risk area to improve safety.

Example 11. The computing device of example 10, wherein the AMR state information comprises AMR center of gravity, AMR center of mass, or position of a manipulator of the ARM.

Example 12. The computing device of example 10, wherein the AMR load information comprises load weight, load volume, or load center of mass.

Example 13. The computing device of example 10, wherein the AMR system processing circuitry is configured to execute the computer-readable instructions to cause the computing device to: vary the AMR state information or the AMR load information to reanalyze for the accident risk area.

Example 14. The computing device of example 10, wherein the AMR system processing circuitry is at least partially within the edge or the cloud.

Example 15. A non-transitory computer-readable medium storing a program including instructions that, when executed by a computing device, cause the computing device to: interpret a human action; receive autonomous mobile robot (AMR) sensor data from an AMR sensor; and detect whether the human action is intended or unintended, wherein the detection is based on a predicted human action, a current human emotional or physical state, the interpreted human action, and the AMR sensor data.

Example 16. The non-transitory computer-readable medium of example 15, wherein the program includes further instructions that, when executed by the computing device, cause the computing device to: estimate a confidence score of the detected human action being detected as intended or unintended.

Example 17. The non-transitory computer-readable medium of example 15, wherein the program includes further instructions that, when executed by the computing device, cause the computing device to: check a plausibility of the human action being detected as intended to override a false detection of the human action being intended, wherein the plausibility check is based on the predicted human action, the current human emotional or physical state, the interpreted human action, and the AMR sensor data.

Example 18. The non-transitory computer-readable medium of example 17, wherein the program includes further instructions that, when executed by the computing device, cause the computing device to: decide an AMR action based on a result of the plausibility check.

Example 19. The non-transitory computer-readable medium of example 15, wherein the program includes further instructions that, when executed by the computing device, cause the computing device to: decide an AMR action based on a result of the detection of the human action being intended or unintended.

Example 20. The non-transitory computer-readable medium of example 15, stored at least partially within the edge or the cloud.

Example 21. A non-transitory computer-readable medium storing a program including instructions that, when executed by a computing device, cause the computing device to: dynamically define a safety area of an AMR based on AMR state information and AMR load information, wherein if there is no other AMR, human, or object in the defined safety area, the AMR will safely avoid collision when breaking or changing direction; continuously analyze, based on the defined safety area, for an accident risk area in which the AMR safety area overlaps with a safety area of the other AMR, with the human, or with the object; and provide the AMR system with the accident risk area to improve safety.

Example 22. The non-transitory computer-readable medium of example 21, wherein the AMR state information comprises AMR center of gravity, AMR center of mass, or position of a manipulator of the ARM.

Example 23. The non-transitory computer-readable medium of example 21, wherein the AMR load information comprises load weight, load volume, or load center of mass.

Example 24. The non-transitory computer-readable medium of example 21, wherein the program includes further instructions that, when executed by the computing device, cause the computing device to: vary the AMR state information or the AMR load information to reanalyze for the accident risk area.

Example 25. The non-transitory computer-readable medium of example 21, wherein the AMR system processing circuitry is at least partially within the edge or the cloud.

While the foregoing has been described in conjunction with exemplary aspect, it is understood that the term "exemplary" is merely meant as an example, rather than the best or optimal. Accordingly, the disclosure is intended to cover alternatives, modifications and equivalents, which may be included within the scope of the disclosure.

Although specific aspects have been illustrated and described herein, it will be appreciated by those of ordinary skill in the art that a variety of alternate and/or equivalent implementations may be substituted for the specific aspects shown and described without departing from the scope of the present application. This application is intended to cover any adaptations or variations of the specific aspects discussed herein.

## Claims

1. A computing device, comprising:
a memory configured to store computer-readable instructions; and
unintended human motion detection processing circuitry configured to execute the computer-readable instructions to cause the computing device to:
interpret a human action;
receive autonomous mobile robot (AMR) sensor data from an AMR sensor; and
detect whether the human action is intended or unintended, wherein the detection is based on a predicted human action, a current human emotional or physical state, the interpreted human action, and the AMR sensor data.

2. The computing device of claim 1, wherein the processing circuitry is configured to execute the computer-readable instructions to cause the computing device to:
estimate a confidence score of the detected human action being detected as intended or unintended.

3. The computing device of any one of the preceding claims, wherein the processing circuitry is configured to execute the computer-readable instructions to cause the computing device to:
check a plausibility of the human action being detected as intended to override a false detection of the human action being intended, wherein the plausibility check is based on the predicted human action, the current human emotional or physical state, the interpreted human action, and the AMR sensor data.

4. The computing device of claim 3, wherein the processing circuitry is configured to execute the computer-readable instructions to cause the computing device to:
decide an AMR action based on a result of the plausibility check.

5. The computing device of any one of the preceding claims, wherein the processing circuitry is configured to execute the computer-readable instructions to cause the computing device to:
decide an AMR action based on a result of the detection of the human action being intended or unintended.

6. The computing device of any one of the preceding claims, wherein the unintended human motion detection processing circuitry is at least partially within the edge or the cloud.

7. The computing device of any one of the preceding claims, wherein the processing circuitry is configured to execute the computer-readable instructions to cause the computing device to:
estimate a current emotional or physical state of the human based on infrastructure sensor data.

8. The computing device of claim 7, wherein the processing circuitry is configured to execute the computer-readable instructions to cause the computing device to:
predict the human action based on the infrastructure sensor data and the current emotional or physical state of a human.

9. The computing device of any one of the preceding claims, wherein the processing circuitry is configured to execute the computer-readable instructions to cause the computing device to:
decide an AMR action based on the detected human action being labeled as intended or unintended

10. A non-transitory computer-readable medium storing a program including instructions that, when executed by a computing device, cause the computing device to:
interpret a human action;
receive autonomous mobile robot (AMR) sensor data from an AMR sensor; and
detect whether the human action is intended or unintended, wherein the detection is based on a predicted human action, a current human emotional or physical state, the interpreted human action, and the AMR sensor data.

11. The non-transitory computer-readable medium of claim 10, wherein the program includes further instructions that, when executed by the computing device, cause the computing device to:
estimate a confidence score of the detected human action being detected as intended or unintended.

12. The non-transitory computer-readable medium of any one of claims 10-11, wherein the program includes further instructions that, when executed by the computing device, cause the computing device to:
check a plausibility of the human action being detected as intended to override a false detection of the human action being intended, wherein the plausibility check is based on the predicted human action, the current human emotional or physical state, the interpreted human action, and the AMR sensor data.

13. The non-transitory computer-readable medium of claim 12, wherein the program includes further instructions that, when executed by the computing device, cause the computing device to:
decide an AMR action based on a result of the plausibility check.

14. The non-transitory computer-readable medium of any one of claims 10-13, wherein the program includes further instructions that, when executed by the computing device, cause the computing device to:
decide an AMR action based on a result of the detection of the human action being intended or unintended.

15. The non-transitory computer-readable medium of any one of claims 10-14, stored at least partially within the edge or the cloud.
